# EUROPEAN PATENT SPECIFICATION

(11) **EP 1 882 194 B1**
(45) Date of publication and mention of the grant of the patent: **01.05.2013**
(21) Application number: 06742954.8
(22) Date of filing: 17.05.2006
(51) Int. Cl.: G01S 13/18, G01F 23/284, G01S 7/03, G01S 7/28

(54) **CLOCK PULSE CONTROL DEVICE OF A MICROWAVE PULSE RADAR**
TAKTIMPULSSTEUEREINRICHTUNG EINES MIKROWELLENIMPULSRADARS
DISPOSITIF DE COMMANDE DE SIGNAL D'HORLOGE D'UN RADAR DE SIGNAL HYPERFREQUENCE

(30) Priority: 17.05.2005 DE 102005022558; 17.05.2005 US 681644 P
(43) Date of publication of application: 30.01.2008
(73) Proprietor: VEGA Grieshaber KG, 77709 Wolfach (DE)
(72) Inventor: GRIESSBAUM, Karl, 77796 Mühlenbach (DE)
(74) Representative: Kopf, Korbinian Paul
(86) International application number: PCT/EP2006/004667
(87) International publication number: WO 2006/122778

(56) References cited:
- DE-U1- 29 815 069
- US-A- 6 114 915
- US-B1- 6 628 229
- US-B1- 6 711 227

## Description

### Reference to related applications

This application claims the benefit of the filing date of United States Provisional Patent Application No.60/681,644 filed May 17, and of German Patent Application No. 10 2005 022 558.6 filed May 17, 2005.

### Field of the Invention

The present invention relates to a clock pulse control device and a method for generating certain transmit- and sampling clock pulses, and to a distance measuring device for measuring distances.

### Background of the Invention

For continuously measuring the fill level of liquids and solids in containers, utilising measurement of the run time of electromagnetic waves, measuring devices are usually installed on or in the ceiling of the container, wherein said measuring devices subsequently transmit waves, either guided through a waveguide or radiated by way of an antenna, in the direction of the product contained in the container. The waves reflected by the product contained in the container are subsequently received by the measuring device. From the measured run time the distance between the sensor and the product contained in the container can be derived, while from the knowledge of the position of the sensor from the bottom of the container the sought fill level can be obtained.

Various methods are known in order to carry out run time measurements of these devices, which when the wave is radiated by way of an antenna is referred to as a radar fill level sensor, and when the wave is guided is often referred to as a TDR fill level sensor (time domain reflectometry). The two most-often used methods are the FMCW method and the pulse radar method. In the FMCW method, the transit time results from a measured differential frequency between the transmitted and the received continuous high frequency signal that has been frequency modulated in a linear manner.

In the pulse radar, short high-frequency pulses are emitted which are received after the corresponding run time.. The time that has passed in between has to be determined as precisely as possible. Since the waves propagate almost at the speed of light the times to be measured are correspondingly short so that normally circuit arrangements are used which by way of sequential sampling of the receive signal convert said receive signal to a slowed down image that is true to the original. This method, which is often referred to as the ETS (equivalent time sampling) method, is described in DE 31 07 444. There, as well as in specification DE 029 81 5069 U1, circuit designs are described with which the desired slow-down in time can be achieved. The sampling method used is based on a sampling signal which from each receive signal triggered by a transmission pulse generates only one brief sampling value. If one controls the position in time of the sampling values relative to the transmit signal or receive signal so that a continuous linear increase in the sampling time between transmit pulses results, then the individual sampling values placed one behind the other result in the desired slowed down receive signal. In this process the amount of the increase in the sampling time relative to the transmit pulse determines the extent of the time expanding.

Two methods are known that cause the required linear increase in the sampling time. One method is characterised by an oscillator or a clock pulse control circuit with a adjustable downstream delay circuit. The pulse generated by the clock pulse signal source triggers not only emission of the transmit pulses, but also, delayed by way of the adjustable delay circuit, generation of the sampling signal. US 55 63 605 describes one implementation of this method.

The second method for implementing the linear increase in the sampling time comprises two oscillators whose frequencies differ slightly. From one oscillator, clock-pulse flanks for triggering the transmit pulse are derived, while from the other oscillator clock-pulse flanks for triggering the sampling signal are obtained. As a result of the slight frequency difference, wherein the sampling repetition frequency is preferably somewhat lower than the transmit repeat frequency, the point in time of sampling shifts, relative to the point in time of transmission, in a linear manner from one transmission period to the next. As long as the frequency difference of the two oscillators is kept constant, high linearity of the time shift and thus high measuring accuracy can be achieved. For this reason one of the two oscillators is designed such that it can be varied via a frequency by way of a control input. The frequency of this oscillator is regulated such that a frequency difference of the two oscillators corresponds to a desired value to be specified. In this arrangement the ratio of transmit repeat frequency to frequency difference determines the slow-down factor of the sampling method.

DE 101 06 681 discloses the formation of the frequency difference by means of a digital phase detector. Usually a signal that most often is a square-wave signal whose frequency corresponds to the difference between the two oscillator frequencies results from forming the frequency difference. Measuring and comparing this difference with a specified desired value makes it possible to regulate one of the oscillators. In a simple manner this can largely be handled by a microcontroller. In this way it also becomes possible, by way of software-based definition of various desired values, to set different slow-down factors for adapting the sensor to variable measuring conditions. However, the smaller the frequency difference set, the more problematical exact regulation of the frequency difference, because measuring the differential frequency requires the time duration corresponding to a full period, for example from one rising flank of the square-wave signal to the next one, so that the space in time in which regulation can become active becomes increasingly large as the differential frequency decreases.

US 6,628,229 B1 discloses a low power pulse radar level transmitter, that has first and second pullable oscillator circuits that are offset from one another by a frequency offset.

US 6,114,915 discloses a method and circuitry for a frequency synthesizer having wide operating frequency range. The frequency synthesizer uses multiple programmable loadable counters in a phase locked loop arrangement to generate any combination of clock frequencies based on user-programmed values. The phase locked loop arrangement comprises a multistage ring oscillator that provides predetermined phase increments at various taps.

US 6, 711, 227 B1 disclosed a synchronizing apparatus comprising a first oscillator for generating a first clock signal, a second oscillator for generating a plurality of second clock signals, and a selection device for selection one of the plurality of second clock signals. However, use with transmit and sampling pulse generators in a distance measuring device is not suggested therein.

### PRESENTATION OF THE INVENTION

It is an object of the invention to effectively implement a clock pulse control.

This object is met by a clock pulse control circuit and by a method for generating a transmit clock pulse and a sampling clock pulse, as well as by a distance measuring device for measuring distances with the characteristics according to the independent claims.

According to an exemplary embodiment of the invention a clock pulse control circuit for generating a transmit clock pulse and a sampling clock pulse is provided. The clock pulse control circuit comprises a first oscillator for generating a first clock pulse of a first frequency and a second oscillator for generating a plurality of second clock pulses of a second frequency, the plurality of second clock pulses are shifted in time in relation to each other, , wherein based on the first clock pulse and the plurality of the second clock pulses the transmit clock pulse is provided to a transmit pulse generator, and the sampling clock pulse is provided to a sampling pulse generator.

According to another exemplary embodiment of the invention a method for generating a transmit clock pulse and a sampling clock pulse for a clock pulse control circuit is provided. In this method in a first step a first clock pulse of a first frequency is generated, for example by a first oscillator; in a second step a plurality of second clock pulses of a second frequency are generated, for example by a second oscillator, the second clock pulses shifted in time in relation to each other,; and in a third step a transmit pulse generator is provided with the transmit clock pulse, and a sampling pulse generator is provided with the sampling clock pulse, based on the first clock pulse and the plurality of second clock pulses.

According to still another exemplary embodiment of the invention a distance measuring device for measuring distances with a clock pulse control circuit according to the invention is provided.

According to the invention the clock pulse control circuit comprising two oscillators may generate a first clock pulse and a plurality of second clock pulses which, if necessary, are offset in time in relation to each other and comprise slightly different frequencies. These second clock pulses may also offset in time in relation to each other, but they may have the same frequency. Subsequently the generated first clock pulse as a transmit clock pulse may trigger a transmit pulse generator, and one of the plurality of second clock pulses as a sampling clock pulse may trigger a sampling pulse generator, or vice versa. Furthermore, the plurality of second clock pulses or the first clock pulse may exclusively or additionally be used for regulating or controlling the oscillators themselves.

If the pulse generators are triggered, by targeted provision of the transmit clock pulses and sampling clock pulses, the clock pulse control circuit may control the pulse generators such that by the sequential sampling method an output signal of the received transmit pulse is generated, which output signal is true to the original and is time expanded. In doing so the sampling pulses may always sample the reflected transmit pulses at a point in time that is offset in time. Since the frequency of the sampling clock pulse and thus of the sampling pulse may for example be lower than that of the transmit pulses, the sampling pulse samples the reflected transmit pulses at an offset in time that continually increases in relation to the transmit pulse. Since the run time of the transmit pulses hardly changes throughout the duration of measurement (after the sampling pulse has sampled a full period from one transmit pulse to the next and has again reached the start value of a transmit pulse), an image of a period of the transmit cycle may be obtained, which image may be true to the original and may be expanded in time.

If the oscillators are regulated and controlled, the clock pulse control circuit, by comparing the first clock pulse to a second clock pulse from the plurality of second clock pulses, may set the frequency difference and/or the offset in time between the first and the second clock pulse. For example, a differential frequency may be the result of this comparison. Based on this differential frequency it may then be possible, for example by a comparison with a specified desired value, to regulate or control one of the oscillators (or both oscillators).

One advantage of the clock pulse control circuit according to the invention may be that, by the plurality of sampling pulses, the sampling of the receive signal may be set to a particular partial range of the overall range between two transmit pulses, and that the frequency of measuring or the frequency of sampling may be increased. If, in order to save power, relatively low transmit and sampling repeat frequencies are selected, then normally, due to the method used, the entire range between two transmit pulses may be sampled for the purpose of a expanding in time, although for fill level measuring, depending on the container used, only a distance range from zero to at most some ten metres can be of interest. With the clock pulse control circuit according to the invention it may now be possible in a targeted way to generate a particular sampling clock pulse with which the corresponding sampling pulse in a targeted manner samples a specific partial range of a transmit pulse, and thus samples a specific distance range. A further advantage of the clock pulse control circuit may be that hardly non-linearities in the electronic components that are involved in the implementation of the circuit occur. Usually, such deviations from linear characteristics may only be remedied by very high circuit expenditure. By generating clock pulses or clock-pulse flanks by way of oscillators, non-linearities and thus circuit expenditure may be reduced.

The invention provides a further advantage in that controlling the clock pulse delay and regulating the differential frequency may for example take place by way of a microcontroller with digital-to-analogue converters connected thereto, and in this way both the distance range sampled within the receive signal and the selected time expansion factor may be adapted very flexibly to the measuring situation. Precise regulation of the frequency difference may be important for non-distorted expanding in time and may thus lead to good measuring accuracy.

According to a further exemplary embodiment of the invention the first oscillator and/or the second oscillator can be adjustable, controllable or regulable. In this way it is for example possible to variably set the frequency and/or the clock pulse signal.

According to a further exemplary embodiment of the invention the clock pulse control circuit further comprises at least one delay element to generate the plurality of second clock pulses that are shifted in time in relation to each other.

If a plurality of time delay elements are provided, they may be connected serially or parallel in relation to a second clock pulse. A time delay element may receive any desired clock pulse and at its output may issue a clock pulse that is offset in time in relation to the received clock pulse. In the case of parallel connection of the time delay elements, by differently set time delay elements, differently time-offset clock pulses may be generated. On the other hand, in the case of a serial arrangement of the time delay elements, by way of this series connection differently time-offset clock pulses may be generated using identically set time delay elements. By using time delay elements with the same time delay, costs may be reduced.

According to a further exemplary embodiment of the invention the at least one time delay element is designed so as to be variably adjustable, controllable or regulable by a control input. In this way the shift in time of the clock pulses may be set in a targeted manner so that in the case of changing environmental conditions there is no need to replace all the time delay elements. In this way a clock pulse control circuit may be used for several environmental conditions, for example changing sizes of containers.

According to a further exemplary embodiment of the invention the clock pulse control circuit further comprises at least one subtraction unit. This subtraction unit can receive a first clock pulse and one of the plurality of second clock pulses and by way of comparison form a differential frequency. This differential frequency may reflect the time shift and the frequency difference between the transmit clock pulse and the sampling clock pulse so that this differential frequency may be used for controlling and regulating the clock pulse control circuit. Subtraction units may be provided with the use of various methods and components, such as for example by mixing the frequencies, the use of coincidence circuits, or the use of digital phase detectors.

According to a further exemplary embodiment of the invention the clock pulse control circuit further comprises at least one logical gate, wherein the logical gate may be designed for receiving the sampling clock pulses and for providing a mutual differential frequency. In this arrangement the logical gate may be an AND gate and/or an OR gate and/or an inverter, or a combination of such gates. This output signal that is formed in this way may comprise all the clock-pulse flanks of the different input clock pulses and may be compared to the first clock pulse in the subtraction unit in order to form a differential frequency in this way, which differential frequency has the same clock-pulse flanks as do all input signals of the logical gate.

According to a further exemplary embodiment of the invention the clock pulse control unit further comprises a control- or regulating unit which controls or regulates the first and/or the second oscillator. In a further exemplary embodiment the control- or regulating unit may be designed such a way that the control or regulating unit compares the differential frequency with a desired value and regulates the oscillators accordingly. In a further exemplary embodiment the control- or regulating unit may be connected, by way of an input, for example to a measuring process control system, a microcontroller or a processor, for example so as to control the oscillators by the differential frequency. Manual regulation may also be provided.

According to a further exemplary embodiment of the invention the clock pulse control circuit further comprises a selection device, wherein the selection device receives the second clock pulses and selects a second clock pulse that has been selected in a targeted manner. The first clock pulse and the second clock pulse that has been selected in a targeted manner may subsequently be conveyed as a transmit pulse to a transmit pulse generator, and as a sampling pulse to a sampling pulse generator. By the targeted selection of the second clock pulses, an option may be created of sampling distance ranges that have been determined based on the time shift between the second clock pulses and the first clock pulse, and of repeatedly sampling a specific measuring range at specifiable frequency, in particular at increased frequency. In a further exemplary embodiment the selection device may be designed such that by way of a control input a measuring process control system, a microcontroller or a processor is connectable so as to control selection of the second clock pulses.

It may also be possible to form several first clock pulses, one of which is subsequently selected in a targeted manner as a transmit clock pulse or a sampling clock pulse. The transmit clock pulse may be formed by the first clock pulse, while the sampling clock pulse may be formed by the selected one of the second clock pulses. As an alternative the sampling clock pulse may be formed by the first clock pulse, while the transmit clock pulse may be formed by the selected one of the second clock pulses.

The term oscillator may refer to a clock pulse generator which may generate a clock pulse at a particular frequency (e.g. 4 MHz). The differential frequency between the frequencies of the two oscillators may for example be in the order of 40 Hz.

According to a further exemplary embodiment of the method, for example by a time delay element a plurality of second clock pulses that are shifted in time in relation to each other may be generated. These second clock pulses, which are shifted in time in relation to the first clock pulse, may subsequently optimise the control and regulation of the oscillators of the clock pulse control circuit, and/or by triggering the sampling pulse generator they may improve and render more precise the distance measuring.

According to a further exemplary embodiment of the method, for example by a subtraction unit, in each case a differential frequency may be formed by comparing the first clock pulse to a respective one of the second clock pulses. This differential frequency obtained in this way may be used for controlling or regulating the oscillators. By using the plurality of second clock pulses several differential frequencies may be formed so that the oscillators may be monitored more frequently, and if needed may be readjusted. This may result in an enormous improvement in the precision and quality of the clock pulse control unit and of the distance measuring.

According to a further exemplary embodiment of the method, for example by a control- and regulating unit, the differential frequency may be compared to a desired value and in line with the result of the comparison the first and/or the second clock pulses, including the time delay and the frequency, may be adjusted. For example, the control- and regulating unit may be connected to a microcontroller or a measuring process control system in order to adjust the clock pulses, for example by way of oscillators. The oscillators may also be adjusted manually.

According to a further exemplary embodiment of the method, in a targeted way, for example using a selection device, selectively a particular first and/or second clock pulse may be provided to a transmit pulse generator as a transmit clock pulse, and/or to a sampling pulse generator as a sampling clock pulse. In this way a particular second clock pulse, which has been delayed in time, as a sampling clock pulse may trigger a sampling pulse generator in order to improve in this way the measuring occurrence of a particular measuring range or measuring range. Furthermore, in a further exemplary embodiment of the method, the selection device may be controlled by way of a processor, a measuring process control system, a microcontroller or manually, and consequently the second clock pulses may be selected.

According to a further exemplary embodiment of the method, for example with a logical gate, a shared output signal may be formed from the plurality of second clock pulses. In this way the frequency of measuring may be increased. According to a further exemplary embodiment of the method, for example a subtraction unit forms a shared differential frequency that is formed from the first clock pulse and the shared clock pulse signal from the plurality of second clock pulses. In this way the circuit expenditure may be reduced enormously because, for example, a single subtraction unit may be adequate.

According to a further exemplary embodiment of the method, for example with a variably adjustable time delay element, the delay of a second clock pulse may be adjusted, and the second clock pulse may be conveyed as a sampling pulse to a sampling pulse generator and/or as a transmit pulse to a transmit pulse generator, and/or said second clock pulse may be provided to a subtraction unit to form a differential frequency. By the free adjustability of this variable time delay element, for example by way of a processor, a microcontroller or manually, the time shift of the second clock pulses may be arbitrarily adjusted. At the same time the clock pulse control circuit may be variably adapted to changed conditions, because for example in the case of changed time shifts the time delay elements no longer have to be exchanged. In this way costs and time expenditure during adaptation to new conditions may be reduced enormously.

Furthermore, according to a further exemplary embodiment of the proximity sensor, in addition to the clock pulse control circuit according to the invention the proximity sensor comprises a transmit pulse generator, a sampling pulse generator, and a sampling mixer. The clock pulse control circuit provides a transmit clock pulse for triggering the transmit pulse generator, and a sampling clock pulse for triggering the sampling pulse generator, wherein the transmit pulse generator generates transmit pulses according to the transmit clock pulse, and the sampling pulse generator generates sampling pulses according to the sampling clock pulse. In the sampling mixer the transmit pulses that are reflected from the surface of the product contained in the container are sampled by the sampling pulses, and the sampling values are provided at an output.

According to a further exemplary embodiment of the distance measuring device, on the output of the sampling mixer an image of the reflected transmit pulses may be provided, which image is true to the original and/or has been time expanded. In this way distance measurements may be evaluated and processed with more precision and accuracy, and at the same time measuring errors may be reduced and avoided.

According to a further exemplary embodiment of the distance measuring device the latter is a fill level meter for measuring the fill level of the contents (for example of liquids or solids) in containers.

According to a further exemplary embodiment of the distance measuring device the latter may be a microwave pulse radar device which may determine the distance , for example by utilising measurements of the run time of electromagnetic waves.

The clock pulse control circuit according to the invention may make it possible to improve the measuring accuracy of distances while involving significantly reduced circuit expenditure. With the use of a plurality of sampling clock pulses a particular measuring range may be measured at significantly increased frequency of occurrence, whereby any changes in distance are measured immediately and the probability of a measuring error occurring may be significantly reduced. Furthermore, as a result of the plurality of sampling clock pulses the clock pulse control circuit according to the invention may provide significantly improved monitoring and adjustment options of the first and second clock pulses.

The embodiments of the clock pulse control circuit also apply to the method and to the distance measuring device, and vice versa.

### BRIEF DESCRIPTION OF THE DRAWINGS

Below, for further explanation and to provide a better understanding of the present invention, several embodiments of the invention are described in more detail with reference to the enclosed drawings, as follows:
- Fig. 1a: shows a block diagram of a sampling circuit of a pulse radar with an oscillator and with an adjustable delay;
- Fig. 1b: shows a time diagram of the signals in relation to Fig. 1a;
- Fig. 2a: shows a block diagram of a sampling circuit of a pulse radar with two oscillators and with differential-frequency regulation;
- Fig. 2b: shows a time diagram of the signals in relation to Fig. 2a;
- Fig. 3a: shows a block diagram of a clock pulse control circuit according to the invention for generating the transmit clock pulses and sampling clock pulses of a pulse radar;
- Fig. 3b: shows a time diagram of the signals in relation to Fig. 3a;
- Fig. 4: shows a block diagram of a clock pulse control circuit according to the invention with serially connected time delay elements;
- Fig. 5: shows an exemplary embodiment of the clock pulse control circuit according to the invention with a logical gate;
- Fig. 6: shows a block diagram of a clock pulse control circuit according to the invention with a variably adjustable time delay element; and
- Fig. 7: shows a block diagram of a clock pulse control circuit according to the invention with a variably adjustable time delay element.

### DETAILED DESCRIPTION OF THE PREFERRED EMBODIMENTS

Identical or similar components in different figures have the same reference characters. The illustrations in the figures are diagrammatic and not to scale.

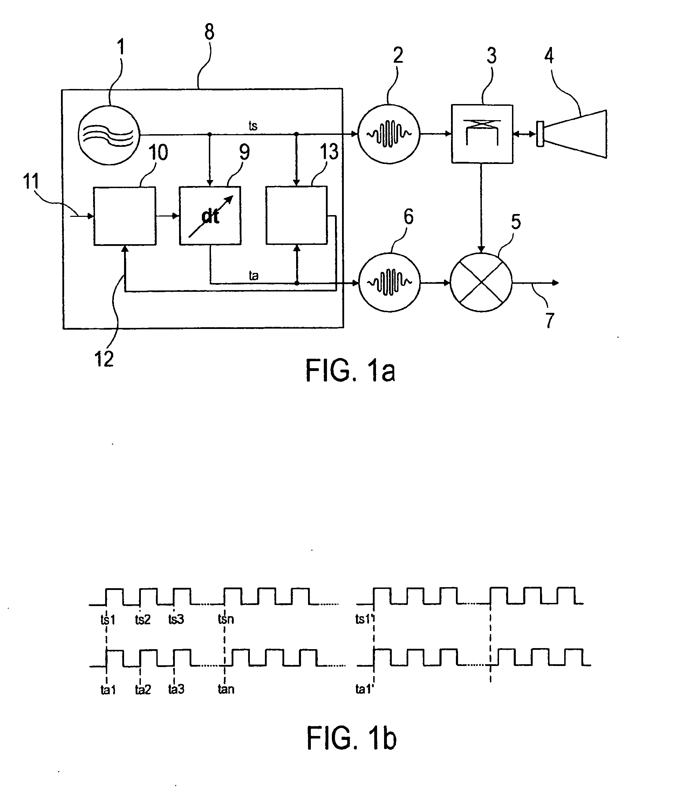

Fig. 1a shows a sampling circuit of a pulse radar in the form of a block diagram.

An oscillator 1 generates a transmit clock pulse ts, which by triggering a transmit pulse generator 2 controls generation of transmit pulses. By way of the directional coupler 3 the transmit pulses generated in this way are predominantly conveyed to the antenna 4 and from the latter are eradiated in the direction of the surface of the product contained in the container. The pulses reflected in the container by the product contained in the container are received after an interval that corresponds to their run time and, by way of the directional coupler 3, are conveyed, as a receive signal, to the sampling mixer 5. There, by means of sampling pulses that are generated in the sampling pulse generator 6, sampling values are taken from the receive signal within defined short periods of time. Together, at the output 7, the sampling values from the individual transmit-/receive periods result in the intermediary frequency signal (ZF) which is a slowed-down (time expanded) copy of the receive signal.

Generating the sampling pulses is controlled by the clock pulse control circuit 8, which generates a sampling clock pulse ta from the already mentioned transmit clock pulse. This takes place by way of the controllable time delay element 9 which at its output outputs the trigger flank of the transmit clock pulse ts, which trigger flank is present at its input, delayed by a defined time span. The magnitude of this time span is determined by a regulating device 10. Said regulating device 10 in turn is controlled by the desired value 11 which is changed in a linear manner by a process control system (not shown). By way of a second input the regulating device 10 obtains the actual value 12 of the time delay, which actual value 12 is formed by the subtraction unit 13 from the delayed clock pulse ta and the non-delayed clock pulse ts.

The time delay, which increases in a linear manner, between the two clock pulses, which time delay results from this regulation, is shown in Fig. 1b.

The top line shows the transmit clock pulse ts in short time sequences, interrupted by extended pauses. The lower line shows the sampling clock pulse ta, correlated in time. At the beginning of a measuring cycle, i.e. at the time ts1 and ta1 respectively, the flanks of the two clock pulse signals are almost synchronous in time because the set time delay of the time delay element 9 is minimal. Subsequently the time delay increases in a linear manner from one clock pulse period to the other so that the flanks ta2, ta3 etc. up to tan quasi continuously shift to the rear in relation to the flanks ts2, ts3 etc. up to tsn. After a defined amount of shift, which amount is given by the time range of the receive signal that is of interest and which determines the measuring range of the sensor, the delay at the point in time ts1' and ta1' respectively is reset to the starting value, and a new measuring cycle commences.

Using this method, by controlling the delay any desired measuring ranges can be sampled with a freely detectable slow-down factor. The regulation loop, which continuously has to regulate to a new desired value and to do so always requires the precise actual value, poses a problem in relation to the achievable linearity and thus accuracy.

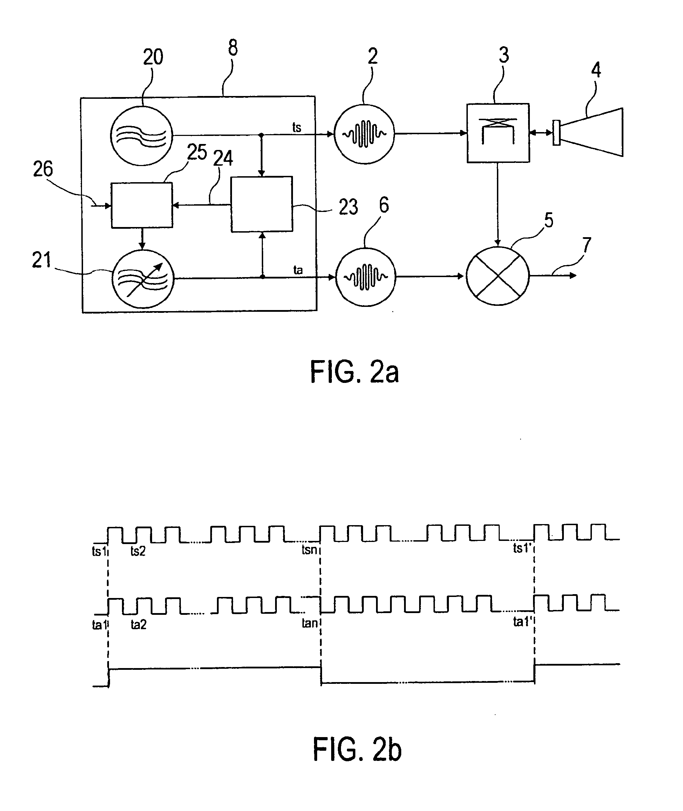

Fig. 2a is a block diagram of another method for the clock pulse control circuit of a pulse radar.

The block diagram of Fig. 2a differs from the block diagram of Fig. 1a in the region of the clock pulse control circuit 8. All the blocks positioned to the right of it exactly correspond to those in Fig. 1a and are not described anew. The clock pulse control circuit 8 comprises two oscillators 20 and 21 which oscillate at approximately the same frequency. In these positions oscillators can be used which based on their high quality generate little in the way of frequency jitter, for example quartz oscillators. While the output signal of the one oscillator 20 as the transmit clock pulse ts triggers the transmit pulse generator 2, the sampling pulses of the sampling pulse generator 6 are controlled by the output signal ta of the second oscillator 21. The subtraction unit 23 forms the differential frequency from the two clock pulses ts and ta which are conveyed to a regulator 25 by way of a differential frequency output 24. The regulator 25 compares the actually measured differential frequencies 24 with a specified desired value 26 and alters the oscillation frequency of the adjustable oscillator 21 so that the regulating deviation becomes minimal.

In Fig. 2b the corresponding clock pulse signals are shown in analogous form in relation to Fig. 1b.

While at the point in time ts1 equals ta1 both clock pulses are synchronous in time, due to the lower frequency of the oscillator 21 the flank of the sampling clock pulse ta continuously shifts in relation to the flank of the transmit clock pulse ts. At the time tsn = tan the two clock pulses are exactly in phase opposition. They again reach in-phase at the point in time ts1' equals ta1', so that a new cycle commences. The third line of Fig. 2b shows the differential frequency signal 24 formed by the subtraction unit. This signal can be generated in various ways, e.g. using a mixer circuit, a digital phase detector or a coincidence circuit. These circuit principles are well known to the average person skilled in the art, so that they are not discussed in detail in this patent specification. The frequency of the differential frequency signal 24 equals the difference between the frequencies of the two clock pulse signals. By measuring the periodicity of the differential frequency 24, i.e. the duration from ta1 to ts1', the regulator 25 obtains information about the actual value of the variable to be regulated. By way of a comparison with the desired value 26, regulation can thus become active. The regulator 25 can for example comprise a microcontroller with timer for measuring time; a digital-to-analogue converter for outputting the control value on the adjustable oscillator 21; as well as the corresponding software for controlling the controller. As an alternative to the above, regulating by way of a commonly used phase locked loop (PLL) or frequency regulation circuit is also possible. If high-quality oscillators are used the frequency regulation can be designed so as to be very stable, and the sampling linearity and thus the distance measuring accuracy are correspondingly good, provided any frequency drifts of the oscillators are detected in time and are regulated out.

In the case of very low differential frequencies 24, measuring their period necessarily can return a result only at large intervals. Any regulation deviation is therefore detected and regulated out with some delay, as a result of which the measuring accuracy is significantly impeded.

There is a disadvantage when compared to the method from Fig. 1 in that sampling always covers the entire range of a transmit clock pulse period so that always the entire measuring range determined by the transmit repeat frequency is sampled. In this way it is not possible to prematurely reset sampling to the start value, for example after a part of the measuring range that was of interest has been examined.

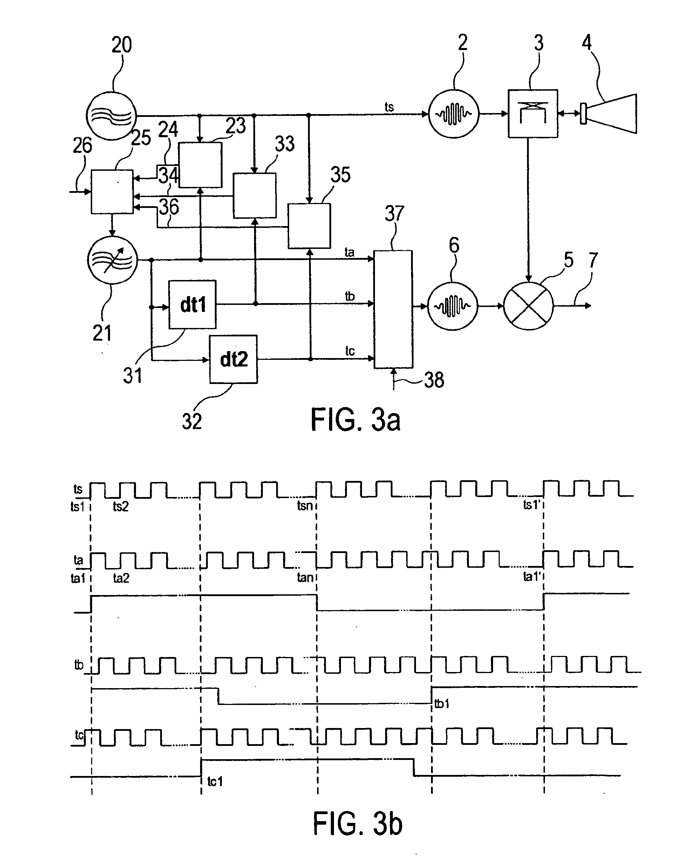

Fig. 3a shows a clock pulse control circuit for generating defined transmit- and sampling clock pulses ts, ta, tb, tc, and for measuring distances according to an exemplary embodiment of the invention.

A few of the components shown in Figs 1a, 2a are also shown in Fig. 3a. In this respect express reference is made to the corresponding description above.

In this arrangement the clock pulse control circuit among other things comprises a first oscillator 20 for generating a first clock pulse ts of a first frequency, and a second oscillator 21 for generating a plurality of second clock pulses ta, tb and tc, which are offset in time in relation to each other, of a second frequency. Based on the first clock pulse and the plurality of the second clock pulses the transmit clock pulse ts is made available to the transmit pulse generator 2, and the sampling clock pulse ta or tb or tc is made available to the sampling pulse generator 6.

Fig. 3a shows an exemplary embodiment of the method according to the invention. The clock pulse control circuit 8 comprises the two oscillators 20 and 21, the subtraction unit 23 that forms the differential frequency 24, and the control- and regulating unit 25 that compares the desired value 26 with the differential frequency 24, 34 or 36. Compared to the device shown in Fig. 2 the clock pulse control circuit 8 of Fig. 3a comprises at least one further subtraction unit 33 or 35, at least one time delay element 31 or 32, and preferably a selection device 37. The components arranged on the right beside the clock pulse control circuit according to the invention, namely the transmit pulse generator 2, the sampling pulse generator 6, the sampling mixer 5, the directional coupler 3 and the antenna 4 all function according to the description provided in relation to Fig. 1a and are not described again.

Corresponding to the method according to the invention, from at least one of the two oscillators, in this instance oscillator 21, at least two output clock pulses with different time delays, in this arrangement the second clock pulses ta, tb or tc, are derived. While ta represents the first second clock pulse of the oscillator 21, which second clock pulse differs from the first clock pulse ts, a clock pulse tb is generated, which is shifted in time in relation to the second clock pulse ta, which clock pulse tb is shifted in the time delay element 31 by a specified duration t1. Correspondingly, a further clock pulse tc, shifted in time, can arise through the second time delay element 32. The additional clock pulses ta, tb and tc are used in the subtraction units 23, 33 and 35 so as to form differential frequencies 24, 34 and 36.

This is shown in more detail in Fig. 3b. From top to bottom the following signals are shown: the transmit clock pulse ts, the output clock pulse of the oscillator 21 ta, the differential frequency 24, second second clock pulse tb that is shifted in time, the differential frequency 34, the third second clock pulse tc that is shifted in time, and the differential frequency 36. The top three signals do not require any further explanation as they correspond to those shown in Fig. 2b. The second second clock pulse tb that is shifted in time is shifted by a specified time in relation to the clock pulse ta so that there is agreement in phase with the transmit clock pulse ts at another point in time, namely point tb1. Consequently, signal change of the associated differential frequency signal 34 takes place precisely at this point in time. The same applies to the clock pulse tc and the associated differential frequency signal 36 in the point in time tc1. All three differential frequency signals that have been generated in this way can be measured by the regulating unit 25 as far as their periods are concerned, and can be used as the current actual value, at the time, for the purpose of regulating. As a result of the time shift of the second clock pulses ta, tb, tc in relation to each other, the differential frequencies 24, 34 and 36 formed thereof are shifted at the same ratio in relation to each other. Since information about the regulating deviation always becomes available at the time when a flank of a differential signal occurs, for the purpose of regulating there is an advantage in that the intervals of measuring and readjusting are significantly shorter.

By way of the selection device 37 it is further possible to select one of the three different second clock pulses ta, tb or tc to drive the sampling pulse generator. Selection is by way of the input 38, wherein selection can be made by a control circuit in the form of a microcontroller. Depending on which one of the differently delayed clock pulses ta, tb or tc has been selected at the time, a different distance range of the radar sensor is sampled. If at the time only a particular distance range is of interest, then always precisely that sampling pulse ta, tb or tc can be selected from the available sampling pulses, which sampling pulse ta, tb or tc samples this range for a defined period of time.

The aforesaid is to be illustrated using an example: the transmit repeat frequency of the transmit clock pulse is 2.5 MHz. This leads to a maximum measuring range of 60 m, which results from the division of the period 400 ns and the constant of the distance-dependent run time of the wave 6.667 ns/m. If in the shown clock pulse control circuit 8 according to the invention the two time delay elements 31 and 32 are selected such that there are time delays for tb = 133 ns and tc = 267 ns, then in every instance always that clock pulse whose differential frequency previously indicated agreement in phase in the form of a rising flank can be switched through as a sampling clock pulse. With reference to Fig. 3b from the point in time ta1 the clock pulse ta is switched through and the measuring range is sampled, commencing at 0 metres. After a flank shift of 133 ns relative to the transmit clock pulse, corresponding to a measuring distance of 20 m, the point in time tc1 is reached, and clock pulse tc will be switched through, as a result of which the sampling procedure will commence anew at the distance value of zero metres. If the distance of 20 m is achieved anew, a change to clock pulse tb occurs and the range between zero m and 20 m is sampled for the third time. In this way it is not the maximum measuring range of 60 m that is examined, but instead the range that is of interest, in the present example the range between 0 m and 20 m, can be examined three times.

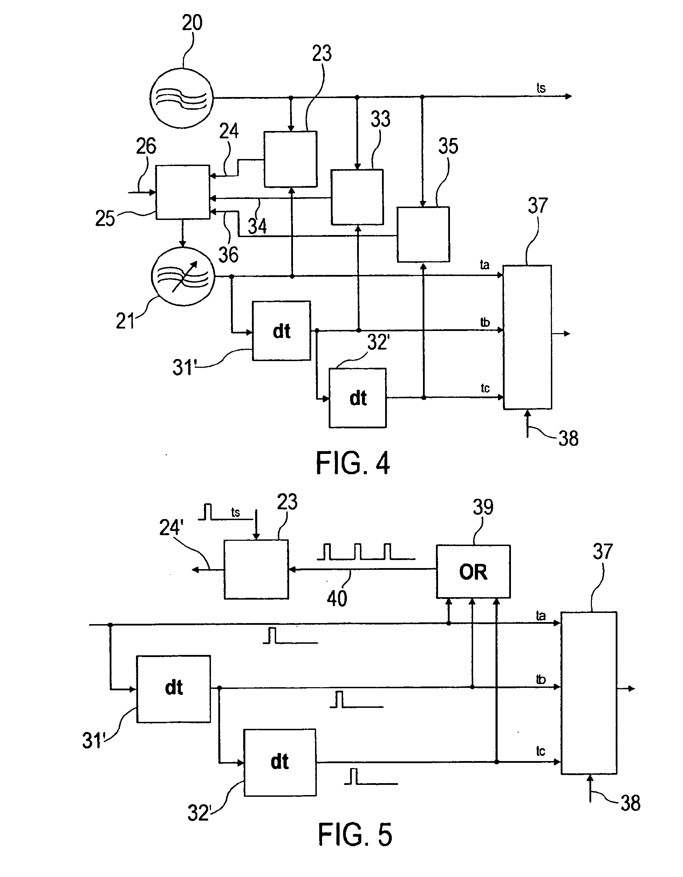

Fig. 4 shows a clock pulse control circuit according to another exemplary embodiment of the invention, which in comparison to the device in Fig. 3a only differs in the arrangement of the time delay elements 31' and 32'. While the time delay elements 31 and 32 are arranged so as to be parallel in Fig. 3a, in Fig. 4 a serial arrangement has been implemented. Therefore, for example, equal time delays can be selected for all time delay elements.

Fig. 5 shows a further variant of the circuit principle of Fig. 4, wherein only those parts are shown that are of importance to explaining the difference.

In this arrangement the rectangular sampling clock pulses have a highly asymmetrical ratio of high level to low level. By using a logical gate, preferably with an OR gate 39, an output signal 40 results which has all the flanks of the different input signals. Comparison with the also asymmetrical transmit clock pulse signal in the subtraction unit 23 provides a differential frequency signal 24' which in a slowed-down form contains the same flanks as the input signal 40 and thus advantageously makes possible more frequent measuring of the desired value, and thus improved regulation or control. In contrast to the embodiment shown in Fig. 4, the embodiment shown in Fig. 5 shows a single subtraction unit 23.

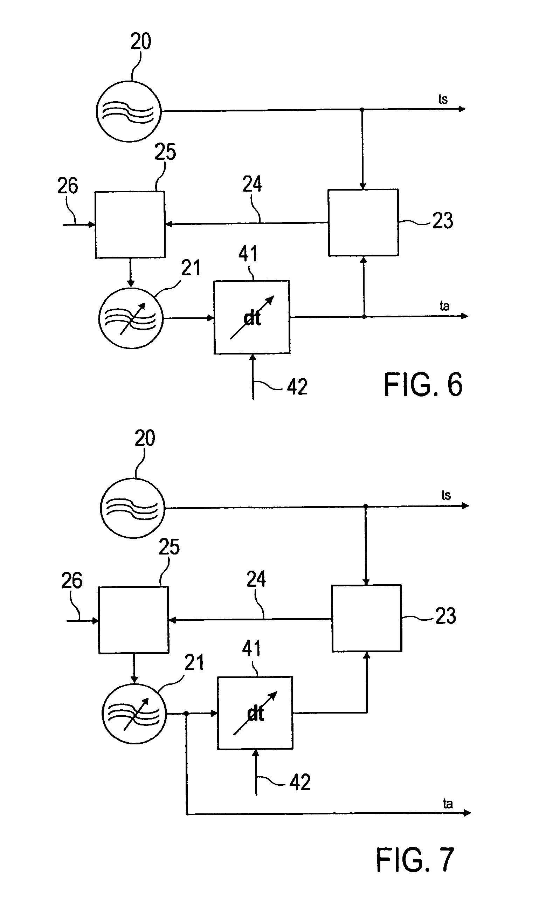

Fig. 6 shows a clock pulse control circuit according to another exemplary embodiment of the invention, which comprises a variably-adjustable time delay element 41. The latter is controlled by a measuring process control system, for example a microcontroller, so that the time delay through the input 42 is preferably changeable in steps. The points in time of switchover and the steps of the variable time delay can be selected such that sampling of the fill level metering device always takes place within a previously specified distance range which only includes a part of the maximum possible distance range.

Based on the above numerical example, for example steps of zero ns, 133 ns and 257 ns time delay are selected. The first stage of 0 ns is switched on first, and the rising flank of the differential signal is awaited. At this point sampling of the distance range commences at 0 m. This step is maintained up to a distance range of approximately 20 m, before the time delay is switched to 257 ns. Consequently, due to the agreement in phase between the transmit clock pulse and the sampling clock pulse at this time, a new flank of the differential frequency signal results. At the same time sampling again starts at zero m measuring distance. After sampling the measuring range of interest up to 20 m, a switchover to 133 ns time delay is made, and a further flank of the differential frequency signal and further sampling of the selected part of the overall measuring range is obtained. After this, again a switch to 0 ns time delay occurs and the cycle commences anew. In this way the same advantages are achieved as is the case with the arrangement according to Fig. 3a, but the switching expenditure is more modest, because only one subtraction unit 23, one time delay element 41 and no change-over switch 37 are needed.

Fig. 7 is intended to show that the sampling clock pulse ta can be conveyed directly from the oscillator 21 to the sampling pulse generator in a way that is identical to that of the state of the art. Only the signal that goes to the subtraction unit 23 is delayed by the variable time delay element 41. In this way with changeover at the appropriate points in time, as described above, one obtains several flanks of the differential frequency signal and thus more frequent information concerning the actual regulating value, which leads to improved regulation. Conversely it is of course also possible to delay only the clock pulse to the sampling pulse generator rather than delaying the clock pulse to the subtraction unit, which approach while not improving regulation makes it possible to select only a part of the total range. The same applies of course also to the embodiments shown in Figs 3 and 4. Furthermore, it is of course also possible instead of delaying the sampling clock pulse to delay the transmit clock pulse or both clock pulses.

In addition it should be pointed out that "comprising" does not exclude other elements or steps, and "a" or "one" does not exclude a plurality. Furthermore, it should be pointed out that features or steps which have been described with reference to one of the above embodiments can also be used in combination with other features or steps of other embodiments described above. Reference characters in the claims are not to be interpreted as limitations.

## Claims

1. A clock pulse control circuit for a distance measuring device for generating a transmit clock pulse signal and sampling clock pulse signal, wherein the clock pulse control circuit comprises
a first oscillator (20) for generating a first clock pulse signal (ts) of a first frequency;
a second oscillator (21) for generating at least a first second clock pulse signal (ta) and a second second clock pulse signal (tb) of a second frequency, that are shifted in time in relation to each other; and
a selection device (37) for selecting one of the at least first second clock pulse signal (ta) and second second clock pulse signal (tb) as a selected second clock pulse signal (ta; tb; tc),
wherein one of the first clock pulse signal (ts) and the selected second clock pulse signal (ta; tb; tc) is conveyed as the transmit clock pulse signal to a transmit pulse generator (2) and the other of the first clock pulse signal (ts) and the selected second clock pulse signal (ta; tb; tc) is conveyed as the sampling clock pulse signal to a sampling pulse generator (6).

2. The clock pulse control circuit according to claim 1, wherein the first oscillator (20) and/or the second oscillator (21) is or are adjustable, controllable or regulable.

3. The clock pulse control circuit according to claim 1 or 2, further comprising at least one time delay element (31; 32) for generating the at least first second clock pulse signal (ta) and second second clock pulse signal (tb) that are shifted in time in relation to each other.

4. The clock pulse control circuit according to claim 3, comprising a plurality of time delay elements (31; 32) of which at least a part is in series and/or parallel connection in relation to each other.

5. The clock pulse control circuit according to claim 3 or 4, wherein the at least one time delay element (41) is designed to be variably adjustable, controllable or regulable by a control input (42).

6. The clock pulse control circuit according to any one of the preceding claims, further comprising at least one subtraction unit (23; 33; 35) to form at least one differential frequency (24; 34; 36) from the first clock pulse signal (ts) and from the at least first second clock pulse signal (ta) and second second clock pulse signal (tb).

7. The clock pulse control circuit according to any one of the preceding claims, further comprising a logical gate (39), wherein the logical gate (39) is designed to receive the at least first second clock pulse signal (ta) and second second clock pulse signal (tb) and to provide a common output signal (40).

8. The clock pulse control circuit according to any one of the preceding claims, further comprising a control unit or regulating unit (25) to control or regulate the first oscillator (20) and/or the second oscillator (21).

9. The clock pulse control circuit according to claim 8, wherein the control unit or regulating unit (25) for comparing a differential frequency (24; 34; 36) comprises a desired value.

10. The clock pulse control circuit according to any one of the preceeding claims, wherein the selection device (37) is controllable by way of a control input (38).

11. A method for generating a transmit clock pulse signal and a sampling clock pulse signal for a clock pulse control circuit for a distance measuring device, wherein the method involves the following steps:
generating a first clock pulse signal (ts) of a first frequency;
generating at least a first second clock pulse signal (ta) and a second second clock pulse signal (tb) of a second frequency, that are shifted in time in relation to each other;
selecting one of the at least first second clock pulse signal (ta) and second second clock pulse signal (tb) as the selected second pulse clock signal (ta; tb; tc);
providing a transmit pulse generator (2) with one of the first clock pulse signal (ts) and the selected second clock pulse signal (ta; tb; tc) as the transmit clock pulse signal, and
providing a sampling pulse generator (6) with the the other of the first clock pulse signal (ts) and the selected second clock pulse signal (ta; tb; tc) as the sampling clock pulse signal,

12. The method according to claim 11, wherein by a time delay the at least first second clock pulse signal (ta) and second second clock pulse signal (tb)that are offset in time in relation to each other are generated.

13. The method according to claim 11 or 12, wherein in each instance a differential frequency (24; 34; 36) is formed by comparing the first clock pulse signal (ts) with a respective one of the at least first second clock pulse signal (ta) and second second clock pulse signal (tb).

14. The method according to claim 13, wherein the differential frequency (24; 34; 36) is compared with a desired value (26) and wherein in accordance with the comparison the frequency of one of the first clock pulse signal (ts) and the at least first second clock pulse signal (ta) and second second clock pulse signal (tb) is adjusted.

15. The method according to any one of claims 11 to 14 wherein the selecting is controlled on the basis of a measuring process control system.

16. The method according to any one of claims 11 to 15 wherein by a logical operation (39) an output signal (40) is formed from the at least first second clock pulse signal (ta) and second second clock pulse signal (tb).

17. The method according to claim 16, wherein by a subtraction unit (23) a differential frequency (24') is formed from the output signal (40) and from the first clock pulse signal (ts).

18. The method according to any one of claims 11 to 17, wherein by a measuring process control system the time delay of the at least first second and second second clock pulse signals (ta; tb; tc) is set, and wherein the sampling clock pulse signal triggers a sampling pulse generator (6) and the transmit clock pulse signal triggers a transmit pulse generator (2) and both the transmit and sampling clock pulse signals are made available to a subtraction unit (23) to form a differential frequency (24).

19. A distance measuring device for measuring distances,
- comprising a clock pulse control circuit (8) according to claims 1 to 10.

20. The distance measuring device according to claim 19,
- comprising the transmit pulse generator (2);
- comprising the sampling pulse generator (6);
- comprising a sampling mixer (5);
wherein by the clock pulse control circuit the transmit clock pulse signal is provided for triggering the transmit pulse generator (2), and the sampling clock pulse signal is provided for triggering the sampling pulse generator (6);
wherein the transmit pulse generator (2) is designed to generate transmit pulses according to the transmit clock pulse signal and to convey the transmit pulses for transmitting by way of an antenna (4);
wherein the sampling pulse generator (6) is designed to generate sampling pulses according to the sampling clock pulse signal and to convey the sampling pulses to the sampling mixer (5); and
wherein in the sampling mixer (5), by the sampling pulses, values of the transmit pulses that are reflected back to the antenna (4) by a surface of the product contained in the container can be sampled and can be made available to an output (7).

21. The distance measuring device according to claim 20, wherein the sampling mixer (5) provides an image of the reflected transmit pulses on an output, which image is true to the original and/or has been expanded in time.

22. The distance measuring device according to any one of claims 19 to 21, wherein the distance measuring device is a fill level meter.

23. The distance measuring device according to any one of claims 19 to 22, wherein the distance measuring device is a microwave pulse radar device.

## Patentansprüche

1. Taktsteuerschaltung für ein Abstandsmessgerät zum Erzeugen eines Sendetaktsignals und eines Abtasttaktsignals, wobei die Taktsteuerschaltung aufweist
einen ersten Oszillator (20) zum Erzeugen eines ersten Taktsignals (ts) einer ersten Frequenz;
einen zweiten Oszillator (21) zum Erzeugen zumindest eines ersten zweiten Taktsignals (ta) und eines zweiten zweiten Taktsignals (tb) einer zweiten Frequenz, die zeitlich gegeneinander verschobenen sind; und
eine Auswahleinrichtung (37) zum Auswählen eines aus dem ersten zweiten Taktsignal (ta) und zweiten zweiten Taktsignal (tb) als ein ausgewähltes zweites Taktsignal (ta; tb; tc);
wobei eines des ersten Taktsignals und des ausgewählten zweiten Taktsignals (ta; tb; tc) einem Sendepulsgenerator (2) als das Sendetaktsignal (ts) zugeführt wird und das andere des ersten Taktsignals (ts) und des ausgewählten zweiten Taktsignals (ta; tb; tc) einem Abtasttaktgenerator (6) als das Abtasttaktsignal zugeführt wird.

2. Taktsteuerschaltung nach Anspruch 1, wobei der erste Oszillator (20) und/oder der zweite Oszillator (21) einstellbar, steuerbar oder regelbar ist oder sind.

3. Taktsteuerschaltung nach Anspruch 1 oder 2, ferner umfassend mindestens ein Zeitverzögerungsglied (31; 32) zum Erzeugen des zumindest ersten zweiten Taktsignals (ta) und zweiten zweiten Taktsignals (tb) einer zweiten Frequenz, die zeitlich gegeneinander verschobenen sind.

4. Taktsteuerschaltung nach Anspruch 3, umfassend eine Mehrzahl von Zeitverzögerungsgliedern (31; 32), von denen zumindest ein Teil zueinander seriell und/oder parallel geschaltet ist.

5. Taktsteuerschaltung nach Anspruch 3 oder 4, wobei das mindestens eine Zeitverzögerungsglied (41) mittels eines Steuereingangs (42) variabel einstellbar, steuerbar oder regelbar ausgebildet ist.

6. Taktsteuerschaltung nach einem der vorangegangenen Ansprüche, ferner umfassend mindestens eine Differenzbildungseinheit (23;33;35) zum Bilden mindestens einer Differenzfrequenz (24; 34; 36) aus dem ersten Taktsignal (ts) und dem zumindest ersten zweiten Taktsignal (ta) und zweiten zweiten Taktsignal (tb).

7. Taktsteuerschaltung nach einem der vorangegangenen Ansprüche, ferner umfassend ein Logikgatter (39), wobei das Logikgatter (39) zum Empfangen des zumindest ersten zweiten Taktsignals (ta) und zweiten zweiten Taktsignals (tb) und zum Bereitstellen eines gemeinsamen Ausgangssignals (40) ausgebildet ist.

8. Taktsteuerschaltung nach einem der vorangegangenen Ansprüche, ferner umfassend eine Steuer- oder Regeleinheit (25) zum Steuern oder Regeln des ersten Oszillators (20) und/oder des zweiten Oszillators (21).

9. Taktsteuerschaltung nach Anspruch 8, wobei die Steuer- oder Regeleinheit (25) zum Vergleich einer Differenzfrequenz (24; 34; 36) mit einem Sollwert ausgebildet ist.

10. Taktsteuerschaltung nach einem der vorhergehenden Ansprüche, wobei die Auswahleinrichtung (37) über einen Steuereingang (38) steuerbar ist.

11. Verfahren zum Erzeugen eines Sendetaktsignals und eines Abtasttaktsignals für eine Taktsteuerschaltung für ein Abstandmessgerät, wobei das Verfahren die folgenden Schritte aufweist:
Erzeugen eines ersten Taktsignals (ts) einer ersten Frequenz;
Erzeugen zumindest eines ersten zweiten Taktsignals (ta) und zweiten zweiten Taktsignals (tb), die zeitlich gegeneinander verschobenen sind;
Auswählen eines des zumindest ersten zweiten Taktsignals (ta) und zweiten zweiten Taktsignals (tb) als ausgewähltes zweites Taktsignal (ta; tb; tc);
Versorgen eines Sendepulsgenerators (2) mit eines des ersten Taktsignals (ts) und des ausgewählten zweiten Taktsignals (ta; tb; tc) als das Sendetaktsignal; und
Versorgen eines Abtasttaktgenerators (6) mit dem anderen des ersten Taktsignals (ts) und des ausgewählten zweiten Taktsignals (ta; tb; tc) als das Abtasttaktsignal.

12. Verfahren nach Anspruch 11, wobei das zumindest erste zweite Taktsignal (ta) und zweite zweite Taktsignals (tb), die zeitlich gegeneinander verschobenen sind, mittels einer Zeitverzögerung erzeugt werden.

13. Verfahren nach Anspruch 11 oder 12, wobei jeweils eine Differenzfrequenz (24;34;36) durch Vergleich des ersten Taktsignals (ts) und einem jeweiligen des zumindest ersten zweiten Taktsignals (ta) und zweiten zweiten Taktsignals (tb) gebildet wird.

14. Verfahren nach Anspruch 13, wobei die Differenzfrequenz (24;34;36) mit einem Sollwert (26) verglichen wird und wobei entsprechend des Vergleichs die Frequenz von einem des zumindest ersten zweiten Taktsignals (ta) und zweiten zweiten Taktsignals (tb) eingestellt wird.

15. Verfahren nach einem der Ansprüche 11 bis 14, wobei die Auswahl basierend auf einer Messablaufsteuerung gesteuert wird.

16. Verfahren nach einem der Ansprüche 11 bis 15, wobei mittels einer Logikoperation (39) aus dem zumindest ersten zweiten Taktsignal (ta) und zweiten zweiten Taktsignal (tb) ein Ausgangssignal (40) gebildet wird.

17. Verfahren nach Anspruch 16, wobei mittels einer Differenzbildungseinheit (23) eine Differenzfrequenz (24') aus dem Ausgangssignal (40) und dem ersten Taktsignal (ts) gebildet wird.

18. Verfahren nach einem der Ansprüche 11 bis 17, wobei mittels einer Messablaufsteuerung die Zeitverzögerung des zumindest ersten zweiten und zweiten zweiten Taktsignals (ta; tb; tc) eingestellt wird und wobei das Abtasttaktsignal einen Abtastpulsgenerators (6) triggert und das Sendetaktsignal einen Sendepulsgenerator (2) triggert und sowohl das Sendetaktsignal als auch das Abtasttaktsignal einer Differenzbildungseinheit (23) zur Bildung einer Differenzfrequenz (24) bereitgestellt werden.

19. Abstandsmessgerät zum Messen von Abständen,
- mit einer Taktsteuerschaltung (8) gemäß den Ansprüchen 1 bis 10.

20. Abstandsmessgerät nach Anspruch 19,
- mit dem Sendepulsgenerator (2);
- mit dem Abtastpulsgenerator (6);
- mit einem Abtastmischer (5);
wobei mittels der Taktsteuerschaltung das Sendetaktsignal zum Triggern des Sendepulsgenerators (2) bereitgestellt ist und das Abtasttaktsignal zum Triggern des Abtastpulsgenerators (6) bereitgestellt ist;
wobei der Sendepulsgenerator (2) zum Erzeugen von Sendepulsen gemäß dem Sendetaktsignal und zum Weiterleiten der Sendepulse zum Senden über eine Antenne (4) eingerichtet ist;
wobei der Abtastpulsgenerator (6) zum Erzeugen von Abtastpulsen gemäß dem Abtasttaktsignal und zum Weiterleiten der Abtastpulse an den Abtastmischer (5) eingerichtet ist, und
wobei im Abtastmischer (5) mittels der Abtastpulse Werte von Sendepulsen, die von einer Oberfläche des Erzeugnisses im Container zu der Antenne (4) zurückreflektiert wurden, abgetastet werden können und an einem Ausgang (7) bereitgestellt werden können.

21. Abstandsmessgerät nach Anspruch 20, wobei der Abtastmischer (5) an einem Ausgang (7) ein originalgetreues und/oder zeitgedehntes Abbild der reflektierten Sendepulse bereitstellt.

22. Abstandmessgerät nach einem der Ansprüche 19 bis 21, wobei das Abstandsmessgerät ein Füllstandsmessgerät ist.

23. Abstandmessgerät nach einem der Ansprüche 19 bis 22, wobei das Abstandmessgerät ein Mikrowellenpulsradargerät ist.

## Revendications

1. Circuit de commande d'impulsions d'horloge pour un dispositif de mesure de distance afin de générer un signal d'impulsions d'horloge d'émission et un signal d'impulsions d'horloge d'échantillonnage, dans lequel le circuit de commande d'impulsions d'horloge comprend :
un premier oscillateur (20) pour générer un premier signal d'impulsions d'horloge (ts) d'une première fréquence,
un second oscillateur (21) pour générer au moins un premier second signal d'impulsions d'horloge (ta) et un deuxième second signal d'impulsions d'horloge (tb) d'une seconde fréquence, lesquels sont décalés dans le temps l'un par rapport à l'autre, et
un dispositif de sélection (37) pour sélectionner l'un parmi le au moins premier second signal d'impulsions d'horloge (ta) et deuxième second signal d'impulsions d'horloge (tb) en tant que second signal d'impulsions d'horloge sélectionné (ta ; tb ; tc),
dans lequel l'un du premier signal d'impulsions d'horloge (ts) et du second signal d'impulsions d'horloge sélectionné (ta ; tb ; tc) est acheminé en tant que signal d'impulsions d'horloge d'émission dans un générateur d'impulsions d'émission (2) et l'autre du premier signal d'impulsions d'horloge (ts) et du second signal d'impulsions d'horloge sélectionné (ta ; tb ; tc) est acheminé en tant que signal d'impulsions d'horloge d'échantillonnage dans un générateur d'impulsions d'échantillonnage (6).

2. Circuit de commande d'impulsions d'horloge selon la revendication 1, dans lequel le premier oscillateur (20) et/ou le second oscillateur (21) est/sont réglables, contrôlables ou régulables.

3. Circuit de commande d'impulsions d'horloge selon la revendication 1 ou 2, comprenant en outre au moins un élément de temporisation (31 ; 32) pour générer les au moins premier second signal d'impulsions d'horloge (ta) et deuxième second signal d'impulsions d'horloge (tb) lesquels sont décalés dans le temps l'un par rapport à l'autre.

4. Circuit de commande d'impulsions d'horloge selon la revendication 3, comprenant une pluralité d'éléments de temporisation (31 ; 32) parmi lesquels au moins une partie sont montés en série et/ou en parallèle les uns par rapport aux autres.

5. Circuit de commande d'impulsions d'horloge selon la revendication 3 ou 4, dans lequel le au moins un élément de temporisation (41) est conçu pour être réglable, contrôlable ou régulable de manière variable par l'intermédiaire d'une entrée de commande (42).

6. Circuit de commande d'impulsions d'horloge selon l'une quelconque des revendications précédentes, comprenant en outre au moins une unité de soustraction (23 ; 33 ; 35) pour former au moins une fréquence différentielle (24, 34, 36) à partir du premier signal d'impulsions d'horloge (ts) et à partir des au moins premier second signal d'impulsions d'horloge (ta) et deuxième second signal d'impulsions d'horloge (tb).

7. Circuit de commande d'impulsions d'horloge selon l'une quelconque des revendications précédentes, comprenant en outre une porte logique (39), dans lequel la porte logique (39) est conçue pour recevoir les au moins premier second signal d'impulsions d'horloge (ta) et deuxième second signal d'impulsions d'horloge (tb) et pour délivrer un signal de sortie commun (40).

8. Circuit de commande d'impulsions d'horloge selon l'une quelconque des revendications précédentes, comprenant en outre une unité de commande ou une unité de régulation (25) pour commander ou réguler le premier oscillateur (20) et/ou le second oscillateur (21).

9. Circuit de commande d'impulsions d'horloge selon la revendication 8, dans lequel l'unité de commande ou l'unité de régulation (25) pour comparer une fréquence différentielle (24 ; 34 ; 36) comprend une valeur voulue.

10. Circuit de commande d'impulsions d'horloge selon l'une quelconque des revendications précédentes, dans lequel le dispositif de sélection (37) est contrôlable par l'intermédiaire d'une entrée de commande (38).

11. Procédé pour générer un signal d'impulsions d'horloge d'émission et un signal d'impulsions d'horloge d'échantillonnage pour un circuit de commande d'impulsions d'horloge d'un dispositif de mesure de distance, dans lequel le procédé comprend les étapes suivantes consistant à :
générer un premier signal d'impulsions d'horloge (ts) d'une première fréquence,
générer au moins un premier second signal d'impulsions d'horloge (ta) et un deuxième second signal d'impulsions d'horloge (tb) d'une seconde fréquence,
lesquels sont décalés dans le temps les uns par rapport aux autres,
sélectionner l'un parmi le au moins premier second signal d'impulsions d'horloge (ta) et deuxième second signal d'impulsions d'horloge (tb) en tant que second signal d'impulsions d'horloge sélectionné (ta ; tb ; tc),
fournir un générateur d'impulsions d'émission (2) avec l'un du premier signal d'impulsions d'horloge (ts) et du second signal d'impulsions d'horloge sélectionné (ta ; tb ; tc) en tant que signal d'impulsions d'horloge d'émission, et
fournir un générateur d'impulsions d'échantillonnage (6) avec l'autre du premier signal d'impulsions d'horloge (ts) et du second signal d'impulsions d'horloge sélectionné (ta ; tb ; tc) en tant que signal d'impulsions d'horloge d'échantillonnage.

12. Procédé selon la revendication 11 dans lequel, par l'intermédiaire d'une temporisation, les au moins premier second signal d'impulsions d'horloge (ta) et deuxième second signal d'impulsions d'horloge (tb) qui sont décalés dans le temps les uns par rapport aux autres sont générés.

13. Procédé selon la revendication 11 ou 12 dans lequel, dans chaque instance, une fréquence différentielle (24 ; 34 ; 36) est formée en comparant le premier signal d'impulsions d'horloge (ts) à un signal respectif parmi les au moins premier second signal d'impulsions d'horloge (ta) et deuxième second signal d'impulsions d'horloge (tb).

14. Procédé selon la revendication 13, dans lequel la fréquence différentielle (24 ; 34 ; 36) est comparée à une valeur voulue (26) et dans lequel, conformément à la comparaison, la fréquence de l'un du premier signal d'impulsions d'horloge (ts) et des au moins premier second signal d'impulsions d'horloge (ta) et deuxième second signal d'impulsions d'horloge (tb) est réglée.

15. Procédé selon l'une quelconque des revendications 11 à 14, dans lequel la sélection est commandée sur la base d'un système de commande de processus de mesure.

16. Procédé selon l'une quelconque des revendications 11 à 15 dans lequel, par l'intermédiaire d'une opération logique (39), un signal de sortie est formé à partir des au moins premier second signal d'impulsions d'horloge (ta) et deuxième second signal d'impulsions d'horloge (tb).

17. Procédé selon la revendication 16 dans lequel, par l'intermédiaire d'une unité de soustraction (23), une fréquence différentielle (24') est formée à partir du signal de sortie (40) et à partir du premier signal d'impulsions d'horloge (ts).

18. Procédé selon l'une quelconque des revendications 11 à 17 dans lequel, par l'intermédiaire d'un système de commande de processus de mesure, la temporisation des au moins premier second et deuxième second signaux d'impulsions d'horloge (ta ; tb ; tc) est établie, et dans lequel le signal d'impulsions d'horloge d'échantillonnage déclenche un générateur d'impulsions d'échantillonnage (6) et le signal d'impulsions d'horloge d'émission déclenche un générateur d'impulsions d'émission (2) et les deux signaux d'impulsions d'horloge d'échantillonnage et d'émission sont mis à disposition dans une unité de soustraction (23) afin de former une fréquence différentielle (24).

19. Dispositif de mesure de distance pour mesurer des distances,
- comprenant un circuit de commande d'impulsions d'horloge (8) selon les revendications 1 à 10.

20. Dispositif de mesure de distance selon la revendication 19,
- comprenant le générateur d'impulsions d'émission (2),
- comprenant le générateur d'impulsions d'échantillonnage (6),
- comprenant un mélangeur d'échantillonnage (5),
dans lequel, par l'intermédiaire du circuit de commande d'impulsions d'horloge, le signal d'impulsions d'horloge d'émission est fourni pour déclencher le générateur d'impulsions d'émission (2), et le signal d'impulsions d'horloge d'échantillonnage est fourni pour déclencher le générateur d'impulsions d'échantillonnage (6),
dans lequel le générateur d'impulsions d'émission (2) est conçu pour générer des impulsions d'émission conformément au signal d'impulsions d'horloge d'émission et pour acheminer les impulsions d'émission en vue d'une transmission par l'intermédiaire d'une antenne (4),
dans lequel le générateur d'impulsions d'échantillonnage (6) est conçu pour générer des impulsions d'échantillonnage conformément au signal d'impulsions d'horloge échantillonnage et pour acheminer les impulsions d'échantillonnage dans le mélangeur d'échantillonnage (5), et
dans lequel, dans le mélangeur d'échantillonnage (5), par l'intermédiaire des impulsions d'échantillonnage, des valeurs des impulsions d'émission qui sont réfléchies vers l'antenne par une surface du produit contenu dans le conteneur peuvent être échantillonnées et mises à disposition dans une sortie (7).

21. Dispositif de distance de mesure selon la revendication 20, dans lequel le mélangeur d'échantillonnage (5) fournit une image des impulsions d'émission réfléchies sur une sortie, laquelle l'image est vraie dans l'original et/ou a été élargie dans le temps.

22. Dispositif de mesure de distance selon l'une quelconque des revendications 19 à 21, dans lequel le dispositif de mesure de distance est un appareil de mesure de niveau de remplissage.

23. Dispositif de mesure de distance selon l'une quelconque des revendications 19 à 22, dans lequel le dispositif de mesure de distance est un dispositif radar d'impulsions à micro-ondes.
